# EUROPÄISCHE PATENTANMELDUNG

(11) **EP 3 064 861 A2**
(43) Veröffentlichungstag der Anmeldung: **07.09.2016**
(21) Anmeldenummer: 16150044.2
(22) Anmeldetag: 04.01.2016
(51) Int. Cl.: F24J 2/46, F24J 2/05

(54) **SOLARKOLLEKTOR-SAMMELLEITUNG SOWIE SOLARKOLLEKTORMODUL ZUR WÄRMEERZEUGUNG**

(30) Priorität: 04.03.2015 DE 102015203817
(71) Anmelder: Robert Bosch GmbH, 70442 Stuttgart (DE)
(72) Erfinder: Otting, Herbert, 49832 Beesten (DE); Lueke, Wolfgang, 48282 Emsdetten (DE); Stockmeier, Holger, 48493 Wettringen (DE)

(57) **Zusammenfassung**

Die Erfindung betrifft eine Solarkollektor-Sammelleitung (20), insbesondere eine Vakuumröhrenkollektor-Sammelleitung (20) für ein Vakuumröhrenkollektormodul (1) einer Vakuumröhrenkollektoranlage, mit einem langgestreckten Mittenabschnitt (22) und wenigstens einem sich daran in Längsrichtung (L) der Sammelleitung (20) anschließenden Längsendabschnitt (24), welcher längsendseitig einen Anschlussabschnitt (25) aufweist, wobei der Mittenabschnitt (22) integral mit dem Längsendabschnitt (24) und der Längsendabschnitt (24) integral mit dem Anschlussabschnitt (25) ausgebildet, insbesondere ausgeformt, ist, und/oder der Anschlussabschnitt (25) eine darin vorgesehene, insbesondere eine darin ausgeformte, Dichtsitzeinrichtung (250) zur inneren Aufnahme einer Dichtung (50) aufweist, und/oder der Längsendabschnitt (24) oder der Mittenabschnitt (22) eine darin vorgesehene, insbesondere eine darin ausgeformte, Thermokompensationseinrichtung (240) aufweist.

Ferner betrifft die Erfindung ein Solarkollektormodul (1), ein Vakuumröhrenkollektormodul (1), einen Solarkollektor (0), einen Vakuumröhrenkollektor (0), eine Kollektoranlage oder ein Thermosystem zur Wärmeerzeugung, z. B. für eine Warmwasserbereitung und/oder eine Heizungsunterstützung, wobei das Solarkollektormodul (1), das Vakuumröhrenkollektormodul (1), der Solarkollektor (0), der Vakuumröhrenkollektor (0), die Kollektoranlage oder das Thermosystem eine erfindungsgemäße Solarkollektor-Sammelleitung (20) aufweist.

## Beschreibung

Die Erfindung betrifft eine Solarkollektor-Sammelleitung für ein Solarkollektormodul, insbesondere eine Vakuumröhrenkollektor-Sammelleitung für ein Vakuumröhrenkollektormodul einer Vakuumröhrenkollektoranlage. Ferner betrifft die Erfindung ein Solarkollektormodul, ein Vakuumröhrenkollektormodul, einen Solarkollektor, einen Vakuumröhrenkollektor, eine Kollektoranlage oder ein Thermosystem zur Wärmeerzeugung, z. B. für eine Warmwasserbereitung und/oder eine Heizungsunterstützung.

### Stand der Technik

Angesichts steigender Preise für fossile Energieträger und einer schwindenden Akzeptanz der Atomenergie kommt einer Nutzung regenerativer Energien in der Zukunft eine wachsende Bedeutung zu. So nutzt eine thermische (Solar-)Kollektoranlage, wie z. B. eine Vakuumröhrenkollektoranlage, die Sonnenenergie zur Wärmeerzeugung z. B. für eine Warmwasserbereitung und wahlweise auch zur Heizungsunterstützung, wobei solche Anlagen energiesparend und umweltschonend sind. Dies spart wertvolle Brennstoffe ein und schont die Umwelt durch weniger Schadstoffemissionen. In einer Vakuumröhrenkollektoranlage wird nicht nur die direkte Sonnenstrahlung in Wärme umgesetzt, sondern auch die diffuse Sonnenstrahlung kann durch deren Kollektormodule genutzt werden. So wirken an trüben Tagen mit einem hohen Anteil an diffusem Licht noch bis zu 300 W/m² auf einen Kollektor bzw. ein Kollektormodul der Vakuumröhrenkollektoranlage.

Eine Warmwasserbereitung ist eine naheliegende Anwendung für eine solche Anlage. Ein über das gesamte Jahr hinweg im Wesentlichen konstanter Warmwasserbedarf ist gut mit einem solaren Energieangebot kombinierbar. Im Sommer lässt sich der Energiebedarf für die Warmwasserbereitung nahezu vollständig von der Vakuumröhrenkollektoranlage abdecken. Ferner kann eine solche Anlage auch für eine Heizungsunterstützung angewendet werden. Allerdings kann die Anlage hierfür nur dann Wärme abgeben, wenn eine Rücklauftemperatur einer Heizung niedriger ist als eine Temperatur der Vakuumröhrenkollektoranlage. Ideal hierfür sind deshalb großflächige Heizkörper mit niedrigen Systemtemperaturen oder Fußbodenheizungen. Bei entsprechender Auslegung deckt die Vakuumröhrenkollektoranlage einen nicht geringen Anteil der benötigten Gesamt-Jahreswärmeenergie für eine Warmwasserbereitung und eine Heizung ab.

Im Mittelpunkt einer jeden Vakuumröhrenkollektoranlage steht neben einem Speicher- oder Puffersystem ein Vakuumröhrenkollektor bzw. dessen Kollektormodule. Dieser nimmt bzw. diese nehmen die einfallende Sonnenenergie durch Absorber auf und wandelt bzw. wandeln die Energie in Wärme um. Eine die Leitrohre in den Absorbern direkt durchströmende Wärmeträgerflüssigkeit, meist ein Gemisch aus Wasser und einem Frostschutzmittel, erhitzt sich dabei und transportiert die Wärme über Sammelleitungen z. B. zu einem Wärmetauscher, einem Speicher und/oder einem Verbraucher. Alternativ können statt Leitrohren in den Absorbern sogenannte Wärmerohre (Heatpipe, Zwei-Phasen-Thermosiphon) angewendet werden, welche unter einer Nutzung einer Verdampfungswärme eines in den Wärmerohren befindlichen Mediums eine hohe Wärmestromdichte erlauben. Hierbei findet am Vakuumröhrenkollektor bzw. dessen Kollektormodulen ein Wärmetausch zwischen den Wärmerohren und einer entsprechend mit Wärmetauschern ausgestalteten bzw. versehenen Sammelleitung statt.

Bei Vakuumröhrenkollektoren gemäß dem Stand der Technik sind deren Sammelleitungen - abgesehen von einem oder einer Mehrzahl von ggf. zusätzlich vorhandenen Anschlüssen für ein oder eine Mehrzahl von Leitrohren - aus mehreren Teilen gefertigt. Dies sind die Rohrleitung selbst und die daran angebrachten Anschlussteile zum hydraulischen Verbinden mehrerer Sammelleitungen bzw. zum hydraulischen Anschluss der Sammelleitung an einen Hydraulikkreis. Für das hydraulische Verbinden zweier Sammelleitungen gibt es derzeit zwei bevorzugte Anschlusstechniken: eine Klemmringverschraubung oder angelötete bzw. angeschweißte Gewindeteile mit außenliegenden O-Ringdichtungen. Diese Arten der Verbindung zweier Sammelleitungen sind bei der Montage von Kollektormodulen aufwändig und benötigen daher vergleichsweise viel Zeit. Ferner bestehen bei den Sammelleitungen gemäß dem Stand der Technik nur wenige Möglichkeiten deren thermische Ausdehnung zu kompensieren. Aus diesem Grund ist eine Anzahl von in Reihe zu montierender Vakuumröhrenkollektoren im Stand der Technik begrenzt.

### Aufgabenstellung

Es ist eine Aufgabe der Erfindung, eine verbesserte Sammelleitung für ein Solarkollektormodul, insbesondere eine verbesserte Sammelleitung für ein Vakuumröhrenkollektormodul bzw. einen Vakuumröhrenkollektor einer Vakuumröhrenkollektoranlage, anzugeben. Hierbei soll die Sammelleitung vergleichsweise einfach aufgebaut sein. Ferner soll eine hydraulische Verbindung zweier Sammelleitungen oder ein hydraulischer Anschluss einer Sammelleitung aufgrund der Sammelleitung einfach zu bewerkstelligen sein, wobei eine Vielzahl von Kollektormodulen in Reihe schaltbar sein sollen. Des Weiteren ist es eine Aufgabe der Erfindung, ein verbessertes Solarkollektormodul, ein verbessertes Vakuumröhrenkollektormodul, einen verbesserten Solarkollektor, einen verbesserten Vakuumröhrenkollektor, eine verbesserte Kollektoranlage und ein verbessertes Thermosystem anzugeben.

### Offenbarung der Erfindung

Die Aufgabe der Erfindung ist mittels einer Solarkollektor-Sammelleitung für ein Solarkollektormodul, insbesondere einer Vakuumröhrenkollektor-Sammelleitung für ein Vakuumröhrenkollektormodul einer Vakuumröhrenkollektoranlage, gemäß Anspruch 1 und gemäß Anspruch 3; und mittels eines Solarkollektormoduls, eines Vakuumröhrenkollektormoduls, eines Solarkollektors, eines Vakuumröhrenkollektors, einer Kollektoranlage oder eines Thermosystems zur Wärmeerzeugung, z. B. für eine Warmwasserbereitung und/oder eine Heizungsunterstützung, gemäß Anspruch 10 gelöst. Hierbei weist das erfindungsgemäße Kollektormodul, der erfindungsgemäße Kollektor, die erfindungsgemäße Kollektoranlage oder das erfindungsgemäße Thermosystem eine erfindungsgemäße SolarkollektorSammelleitung auf. - Vorteilhafte Weiterbildungen, zusätzliche Merkmale und/oder Vorteile der Erfindung ergeben sich aus den abhängigen Ansprüchen und der folgenden Beschreibung.

Eine Ausführungsform der erfindungsgemäßen Solarkollektor-Sammelleitung oder der erfindungsgemäßen Vakuumröhrenkollektor-Sammelleitung umfasst einen langgestreckten Mittenabschnitt und wenigstens einen sich daran in Längsrichtung der Sammelleitung anschließenden Längsendabschnitt, welcher längsendseitig einen Anschlussabschnitt aufweist, wobei der Mittenabschnitt integral mit dem Längsendabschnitt und der Längsendabschnitt integral mit dem Anschlussabschnitt ausgebildet, insbesondere ausgeformt, ist.

D. h. gemäß der Erfindung sind der Mittenabschnitt, der Längsendabschnitt und der Anschlussabschnitt der Sammelleitung stofflich einstückig zusammengehalten, wobei die Sammelleitung bevorzugt aus einem einzigen Ursprungsstück gefertigt ist, das bevorzugt seinerseits stofflich einstückig oder integral ausgebildet ist. D. h. die Sammelleitung weißt in ihren Längsendabschnitten keine Schweiß- oder Lötnaht. Ferner weist die Sammelleitung kein Gewinde auf. Der Anschlussabschnitt kann eine darin vorgesehene, insbesondere eine darin ausgeformte, Dichtsitzeinrichtung zur inneren Aufnahme einer Dichtung aufweisen, und/oder der Längsendabschnitt oder der Mittenabschnitt kann eine darin vorgesehene, insbesondere eine darin ausgeformte, Thermokompensationseinrichtung aufweisen.

Eine weitere Ausführungsform der erfindungsgemäßen Solarkollektor-Sammelleitung oder der erfindungsgemäßen Vakuumröhrenkollektor-Sammelleitung umfasst ebenfalls einen langgestreckten Mittenabschnitt und wenigstens einen sich daran in Längsrichtung der Sammelleitung anschließenden Längsendabschnitt, welcher längsendseitig einen Anschlussabschnitt aufweist, wobei der Anschlussabschnitt eine darin vorgesehene, insbesondere eine darin ausgeformte, Dichtsitzeinrichtung zur inneren Aufnahme einer Dichtung aufweist, und/oder der Längsendabschnitt oder der Mittenabschnitt eine darin vorgesehene, insbesondere eine darin ausgeformte, Thermokompensationseinrichtung aufweist. Hierbei kann der Mittenabschnitt integral mit dem Längsendabschnitt und der Längsendabschnitt integral mit dem Anschlussabschnitt ausgebildet, insbesondere ausgeformt, sein.

Gemäß der Erfindung kann die Dichtsitzeinrichtung wenigstens einen Dichtungssitz aufweisen, wobei der Dichtungssitz als eine in der Sammelleitung vollständig umlaufende Innennut ausgebildet ist. Die Innennut ist außen an der Sammelleitung bevorzugt als ein umlaufender Vorsprung ausgebildet. Eine Tiefe der Innennut in Radialrichtung der Sammelleitung kann hauptsächlich oder im Wesentlichen einer Breite der Innennut in Längsrichtung entsprechen. Hierbei kann eine einzelne Dichtsitzeinrichtung ein, zwei, drei oder ggf. mehr Dichtungssitze aufwiesen. Eine Dichtung für einen Dichtungssitz ist bevorzugt als eine O-Ringdichtung ausgebildet. Eine andere Dichtung, wie z. B. eine Formdichtung, ist natürlich anwendbar.

Gemäß der Erfindung kann die Thermokompensationseinrichtung einem Aufnehmen einer thermischen Ausdehnung der Sammelleitung dienen, wobei die Thermokompensationseinrichtung bevorzugt bogenfaltenartig oder bevorzugt faltenbalgartig aus einer Wandung der Sammelleitung herausgeformt ist und um die Sammelleitung vollständig herumläuft. Eine Ausbildung in Lyraform ebenfalls anwendbar. Die Thermokompensationseinrichtung kann wenigstens eine Thermokompensationsvorrichtung aufweisen. Bevorzugt sind dabei sich radial erstreckende Umfangsseiten einer Thermokompensationsvorrichtung im Wesentlichen parallel angeordnet. Ein bevorzugt spitzer Winkel der Umfangsseiten zueinander ist natürlich anwendbar. Die Umfangsseiten können dabei radial außen mittels eines umlaufenden Materialbogens der Sammelleitung miteinander integral verbunden sein.

Die Thermokompensationsvorrichtung kann dabei als eine in der Sammelleitung vollständig umlaufende Innenspalte ausgebildet sein, wobei die Innenspalte außen an der Sammelleitung bevorzugt als ein umlaufender Vorsprung ausgebildet ist. Ferner kann insbesondere eine Tiefe der Innenspalte in Radialrichtung größer sein, bevorzugt im Wesentlichen um mehr als ein doppeltes oder im Wesentlichen um mehr als ein dreifaches größer sein, als eine Breite der Innenspalte in Längsrichtung der Sammelleitung.

Eine Thermokompensationsvorrichtung in der Sammelleitung kann tiefer als ein Dichtungssitz eingerichtet sein, d. h. ein Radius der Sammelleitung im Bereich einer Thermokompensationsvorrichtung ist dabei größer als ein Radius der Sammelleitung im Bereich eines Dichtungssitzes. Eine einzelne Thermokompensationseinrichtung kann eine, zwei, drei, vier oder ggf. eine Vielzahl von Thermokompensationsvorrichtungen besitzen. Ferner kann ein Längsendabschnitt der Sammelleitung eine einzige oder zwei Thermokompensationsvorrichtungen und der andere Längsendabschnitt dieser Sammelleitung zwei, drei oder vier Thermokompensationsvorrichtungen aufweisen. Generell wird eine Anzahl und eine Form der Thermokompensationsvorrichtungen entsprechend der Toleranzen (axiale und/oder laterale Wärmedehnung) ausgelegt.

Beide Längsendabschnitte einer Sammelleitung können in ihren betreffenden Anschlussabschnitten jeweils zwei Dichtungssitze aufweisen. Ein Dichtungssitz ist natürlich ebenfalls anwendbar. Ferner können beide Längsendabschnitte einer Sammelleitung benachbart zu ihren Anschlussabschnitten jeweils eine Thermokompensationseinrichtung aufweisen, wobei eine Thermokompensationseinrichtung mehr Thermokompensationsvorrichtungen als die andere Thermokompensationseinrichtung aufweisen kann. Natürlich ist es möglich, hier auf beiden Seiten die gleiche Anzahl an Thermokompensationsvorrichtungen vorzusehen. Ferner ist es alternativ oder zusätzlich möglich, im Mittenabschnitt der Sammelleitung eine Thermokompensationseinrichtung einzurichten.

Gemäß der Erfindung kann die Sammelleitung an beiden Längsendabschnitten jeweils einen Anschlussabschnitt aufweisen. Ferner kann der Mittenabschnitt der Sammelleitung als ein Leitrohrabschnitt oder ein Wärmerohr-abschnitt ausgebildet sein. Des Weiteren kann der Anschlussabschnitt als ein mechanischer und/oder hydraulischer Anschlussabschnitt ausgebildet sein. Darüber hinaus kann der Mittenabschnitt einen einzigen Leitrohranschluss oder eine Vielzahl von Leitrohranschlüssen aufweisen.

### Kurzbeschreibung der Zeichnung

Die Erfindung ist im Folgenden anhand von Ausführungsbeispielen einer Ausführungsform einer Variante der Erfindung unter Bezugnahme auf die beigefügte detaillierte und nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung, der Bezugszeichenliste und den Patentansprüchen mit denselben Bezugszeichen versehen und/oder in den Figuren der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen, Kombinationen etc. zu der dargestellten Ausführungsform und/oder den erläuterten Ausführungsbeispielen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung, der Figurenbeschreibung und/oder der Bezugszeichenliste, ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:
- Fig. 1: in einer zweidimensionalen, zentralen Schnittansicht eine erfindungsgemäße Sammelleitung für ein Vakuumröhrenkollektormodul, mit einem Fluidanschluss für ein Leitrohr;
- Fig. 2: in einer Perspektivansicht zwei erfindungsgemäße hydraulische Kollektorsteckverbindungen je zweier erfindungsgemäßer Sammelleitungen, einer erfindungsgemäßen Kollektorsteckverbindungsanordnung; und
- Fig. 3: eine zweidimensionale, zentrale Schnittansicht der Kollektorsteckverbindungsanordnung aus Fig. 2 mit zwei erfindungsgemäßen Hydrauliksteckverbindern zur hydraulischen Verbindung je zweier Sammelleitungen.

### Ausführungsformen der Erfindung

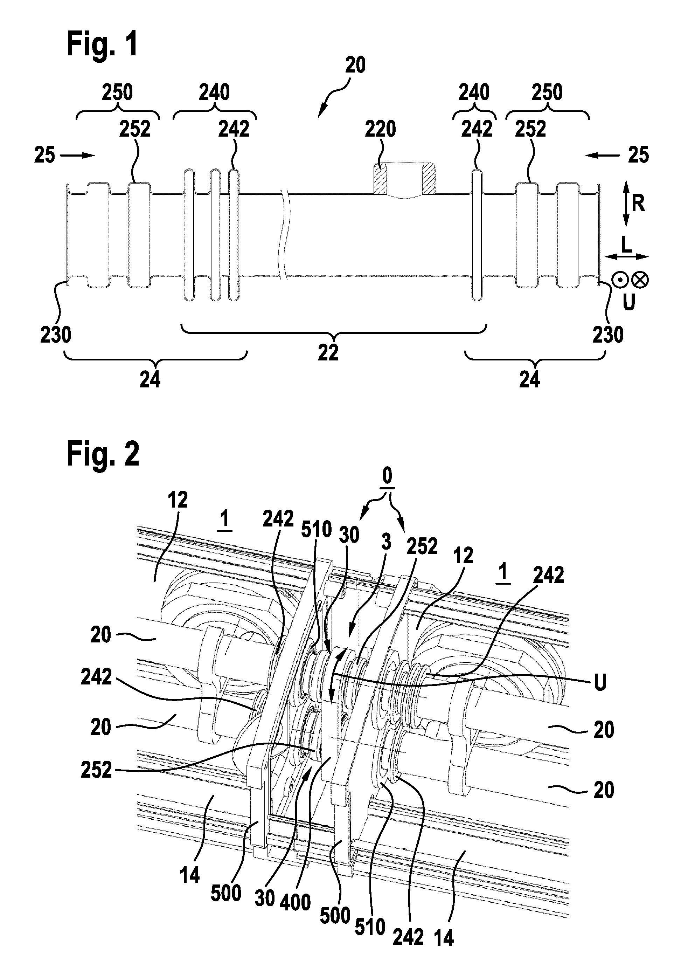

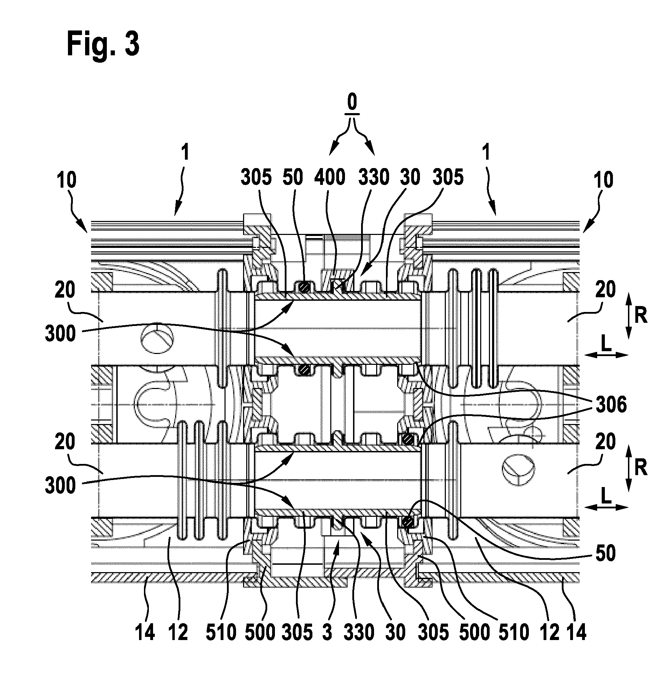

Die Erfindung ist im Folgenden anhand von Ausführungsbeispielen einer Ausführungsform (Fig. 1) einer Sammelleitung 20 für ein Vakuumröhrenkollektormodul 1 (Fig. 2 und 3) einer Vakuumröhrenkollektoranlage, näher erläutert. Die Erfindung ist jedoch nicht auf eine solche Ausführungsform oder die erläuterten Ausführungsbeispiele beschränkt, sondern ist von grundlegenderer Natur, sodass sie auf sämtliche Sammelleitungen im Sinne der Erfindung, z. B. für einen allgemeinen (Solar-)Kollektor 0 angewendet werden kann, wobei der (Solar-)Kollektor 0 wenigstens ein Kollektormodul 1 mit wenigstens einer thermischen Kollektoreinheit aufweist. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

Die in der Fig. 1 dargestellte erfindungsgemäße Sammelleitung 20 umfasst einen z. B. als Leitrohrabschnitt 22 (Leitrohranschluss 220) oder Wärmerohrabschnitt 22 (nicht dargestellt) ausgebildeten, im Wesentlichen röhrenförmig Mittenabschnitt 22, an welchem sich beidseitig ein im Wesentlichen röhrenförmiger Längsendabschnitt 24 anschließt, welcher jeweils längsendseitig einen im Wesentlichen röhrenförmigen Anschlussabschnitt 25 aufweist. Die Sammelleitung 20 ist einteilig, insbesondere integral oder stofflich einstückig, gefertigt, wobei die Sammelleitung 20 bevorzugt durch Kaltumformen oder Hydroformen hergestellt ist. Aus diesem Grund ist es möglich, eine Wandungsstärke der Sammelleitung 20 zu verringern, eine Bearbeitung der Sammelleitung 20 zu reduzieren und damit Kosten einzusparen. Es gibt keine Stoßstellen und ferner besteht keine Gefahr von Undichtigkeiten, da keine mechanischen Schnittstellen wie im Stand der Technik vorhanden sind.

Im Folgenden wird nur noch ein Längsendabschnitt 24 der Sammelleitung 20 betrachtet, das hierzu Gesagte kann analog auf den zweien Längsendabschnitt 24 der Sammelleitung 20 angewendet werden. An einem freien Ende des Anschlussabschnitts 25 des Längsendabschnitts 24 weist die Sammelleitung 20 eine Montageeinrichtung 230 für eine Fluidverbindung mit einer zweiten Sammelleitung 20 oder für einen Anschluss an einen Hydraulikkreis auf. Die Montageeinrichtung 230 kann als eine Rasteinrichtung (Haken, Schulter, Ausnehmung etc.), ein Vorsprung, eine Ausnehmung, ein Flansch 230, ein Außenbund 230 etc. ausgebildet sein. Vorliegend ist die Montageeinrichtung 230 als Flansch 230 bzw. Außenbund 230 ausgebildet, wobei bevorzugt eine Materiallage einer Wandung der Sammelleitung 20 radial R aufgebogen ist (Radius) und in Umfangsrichtung U der Sammelleitung 20 bevorzugt vollständig umläuft.

Weiter nach innen, abseits der Montageeinrichtung 230 weist der Anschlussabschnitt 25 eine Dichtsitzeinrichtung 250 auf, welche einer Abdichtung der Sammelleitung 20 gegenüber einem Hydrauliksteckverbinder 300 (Fig. 3) einer hydraulischen Kollektorsteckverbindung 30 einer hydraulischen Kollektorsteckverbindungsanordnung 3 (Fig. 2 und 3) dient. Die Dichtsitzeinrichtung 250 ist innen in der Sammelleitung 20 eingerichtet und derart ausgebildet, dass mittels dieser innen in der Sammelleitung 20 eine Dichtung 50, insbesondere eine O-Ringdichtung 50, aufnehmbar ist (hiervon sind, von eigentlich acht in der Kollektorsteckverbindungsanordnung 3 vorgesehenen O-Ringdichtungen 50, lediglich zwei in der Fig. 3 dargestellt).

Hierfür weist die Dichtsitzeinrichtung 250 wenigstens einen, insbesondere eine Mehrzahl, bevorzugt zwei Dichtungssitze 252 auf. Ein Dichtungssitz 252 ist dabei insbesondere als eine Innennut 252 ausgebildet, wobei diese Innennut 252 außen als umlaufender Vorsprung 252 oder Bund 252 der Sammelleitung 20 erscheint. Insbesondere für eine Anwendung von O-Ringdichtungen 50 ist eine Tiefe eines Dichtungssitzes 252 in Radialrichtung R der Sammelleitung 20 ungefähr so tief, wie der Dichtungssitz 252 in Längsrichtung L der Sammelleitung 20 breit ist. Zwischen zwei Dichtungssitzen 252 einer Dichtsitzeinrichtung 250 besitzt die Sammelleitung 20 bevorzugt ihren herkömmlichen Durchmesser, welchen sie z. B- auch in ihrem Mittenabschnitt 22 aufweisen kann.

Weiter nach innen, abseits der Dichtsitzeinrichtung 250 weist der Längsendabschnitt 24 oder auch der Mittenabschnitt 22 eine Thermokompensationseinrichtung 240 auf. Die Thermokompensationseinrichtung 240 dient einem Aufnehmen einer thermischen Ausdehnung bzw. Kürzung der Sammelleitung 20 gegenüber einer zweiten Sammelleitung 20 oder gegenüber einem Anschluss an den Hydraulikkreis. Aus diesem Grund ist es möglich, mehrere Kollektormodule 1 miteinander zu verbinden, wobei keine Spannungsprobleme durch die thermischen Ausdehnungen der beteiligten Sammelleitungen 20 entstehen. Die Thermokompensationseinrichtung 240 ist bevorzugt durch die Wandung der Sammelleitung 20 konstituiert, wobei die Thermokompensationseinrichtung 240 insbesondere faltenbalgartig (links in der Fig. 1) und/oder insbesondere bogenfaltenartig (rechts in der Fig. 1) aus der Wandung der Sammelleitung 20 herausgebildet ist.

Hierfür weist die Thermokompensationseinrichtung 240 wenigstens einen (rechts in der Fig. 1) oder eine Mehrzahl von z. B. zwei oder drei (links in der Fig. 1) Thermokompensationsvorrichtungen 242 auf. Eine Thermokompensationsvorrichtung 242 ist dabei insbesondere als eine Innenspalte 242 oder eine Innennut 242 der Sammelleitungen 20 ausgebildet, wobei diese Innenspalte 242 bzw. Innennut 242 außen als umlaufender Vorsprung 242 oder Bund 242 der Sammelleitung 20 erscheint. Eine Tiefe einer Thermokompensationsvorrichtung 242 in Radialrichtung R der Sammelleitung 20 ist bevorzugt größer als eine Erstreckung der Thermokompensationsvorrichtung 242 in Längsrichtung L der Sammelleitung 20. Zwischen zwei Thermokompensationsvorrichtungen 242 einer Thermokompensationseinrichtung 250 besitzt die Sammelleitung 20 bevorzugt ihren herkömmlichen Durchmesser, welchen sie auch in ihrem Mittenabschnitt 22 aufweisen kann. Eine anderer Durchmesser der Sammelleitung 20 zwischen zwei Thermokompensationsvorrichtungen 242 ist natürlich anwendbar.

Eine erfindungsgemäße hydraulische Kollektorsteckverbindung 30 (siehe Fig. 2 und 3) umfasst einen Hydrauliksteckverbinder 300 zur hydraulischen Verbindung zweier Sammelleitungen 20, insbesondere von Kollektormodulen 1, wobei der Hydrauliksteckverbinder 300 zwei längsendabschnittsseitige Anschlussabschnitte 305 aufweist, welche innerhalb zweier einander gegenüberliegender Sammelleitungen 20 vorgesehen, insbesondere eingesteckt, sind. Hierbei können die beiden Sammelleitungen 20 wie oben geschildert ausgebildet sein. Die beiden Sammelleitungen 20 können an ihren einander gegenüberliegenden Enden jeweils eine Montageeinrichtung 230 aufweisen, welche mit einer Montageeinrichtung 330 des Hydrauliksteckverbinders 300 verbunden sind.

Der erfindungsgemäße Hydrauliksteckverbinder 300 dient dabei ferner einer mechanischen Verbindung der beiden Sammelleitungen 20 oder einer mechanischen Verbindung einer Sammelleitung 20 mit einem Hydraulikkreis. Hierbei kann eine Sammelleitung 20 oder es können die Sammelleitungen 20 als Vakuumröhrenkollektor-Sammelleitungen 20 ausgebildet sein. Ein Mittenabschnitt 22 einer Sammelleitung 20 kann als ein Leitrohrabschnitt 22 oder ein Wärmerohrabschnitt 22 ausgebildet sein. Die Anschlussabschnitte 305 des Hydrauliksteckverbinders 300 können innen im Wesentlichen miteinander fluchten. Ferner weist ein Anschlussabschnitt 305 des Hydrauliksteckverbinders 300 an seinem freien Ende bevorzugt eine Fase 306 oder einen Zentrierbund 306 auf.

Die Kollektorsteckverbindung 30 kann eine Montagevorrichtung 400 aufweisen, welche die Montageeinrichtung 230 der einen Sammelleitung 20, die Montageeinrichtung 330 des Hydrauliksteckverbinders 300 sowie die Montageeinrichtung 230 der zweiten Sammelleitung 20 mechanisch fest verbindet. Die beiden Sammelleitungen 20 können an ihren einander gegenüberliegenden Enden jeweils einen Flansch 230 aufweisen, zwischen welchen ein Außenbund 330 des Hydrauliksteckverbinders 300 aufgenommen ist.

Die Kollektorsteckverbindung 30 kann ferner eine Montageklammer 400 umfassen, mittels welcher der Flansch 230 der einen Sammelleitung 20, der Außenbund 330 des Hydrauliksteckverbinders 300 sowie der Flansch 230 der zweiten Sammelleitung 20 mechanisch zusammenspannt sind. Hierbei umgreift die Montageklammer 400 die beiden Flansche 230 der Sammelleitungen 20 mit dem dazwischen befindlichen Außenbund 330 des Hydrauliksteckverbinders in Umfangsrichtung U der Sammelleitungen 20 wenigstens teilweise oder wenigstens teilweise an einem Umfangsabschnitt, und spannt diese bevorzugt mit einer mechanischen Vorspannung axial zusammen.

Die Montageklammer 400 kann als eine im Wesentlichen u-förmige und/oder im Wesentlichen starre Montageklammer 400 ausgebildet sein, welche über die Montageeinrichtungen 230, 330, 230; 230, 330, 230 schiebbar ist und mittels zweier bevorzugt innenliegender Seiten die betreffenden Montageeinrichtungen 230, 330, 230; 230, 330, 230 axial zusammenhält bzw. -presst. Ferner kann die Montageklammer 400 als eine im Wesentlichen o-förmige Montageklammer 400 mit zwei gegeneinander bewegbaren, insbesondere schwenkbaren, und am Umfang miteinander verrastbaren Schenkeln, ausgebildet sein, welche über den Montageeinrichtungen 230, 330, 230; 230, 330, 230 montierbar ist und mittels zweier bevorzugt innenliegender Seiten die betreffenden Montageeinrichtungen 230, 330, 230; 230, 330, 230 axial zusammenhält bzw. -presst.

Hier kann man schon erkennen, dass eine einzelne Montageklammer 400 nicht nur eine einzige Kollektorsteckverbindung 30 mechanisch fest verbinden kann, sondern eine Mehrzahl von Kollektorsteckverbindungen 30 einer hydraulischen Kollektorsteckverbindungsanordnung 3 (siehe unten) gemeinsam verbinden kann. Die beiden innenliegenden Seiten der Montageklammer 400, welche die betreffenden Montageeinrichtungen 230, 330, 230; 230, 330, 230 axial zusammenhalten bzw. -pressen, sind bevorzugt die innenliegenden Seiten zweier Schenkel eines u-förmigen Profils einer Materiallage der Montageklammer 400, welche in Umfangsrichtung U um die Montageeinrichtungen 230, 330, 230; 230, 330, 230 umläuft.

Die Sammelleitungen 20 können in jeweils einem Anschlussabschnitt 25 eine darin vorgesehene, insbesondere eine darin ausgeformte, Dichtsitzeinrichtung 250 zur inneren Aufnahme jeweils einer Dichtung 50 aufweisen. Hierbei kann die jeweilige Dichtsitzeinrichtung 250 bevorzugt wenigstens einen Dichtungssitz 252 zur inneren Aufnahme der Dichtung 50 aufweisen, der als eine in der betreffenden Sammelleitung 20 vollständig umlaufende Innennut 252 ausgebildet ist, wobei die Innennut 252 außen an der Sammelleitung 20 bevorzugt als ein umlaufender Vorsprung 252 ausgebildet ist. Die Anschlussabschnitte 305 des Hydrauliksteckverbinders 300 können in die Anschlussabschnitte 25 der gegenüberliegenden Sammelleitungen 20 eingesteckt sein, wobei die Dichtungen 50 der Dichtsitzeinrichtungen 250 bzw. der Dichtungssitze 252 der Sammelleitungen 20, die Sammelleitungen 20 gegenüber dem Hydrauliksteckverbinder 300 fluiddichten.

Die Kollektorsteckverbindung 30 kann ferner eine Dichteinrichtung 510 aufweisen, mittels welcher ein Längsendabschnitt 24 einer Sammelleitung 20 oder der Anschlussabschnitt 25 einer Sammelleitung 20 außen dichtbar und/oder halterbar ist. Hierbei kann die Dichteinrichtung 510 in einer Halterung 500 untergebracht sein, wobei die Halterung 500 einen Abschnitt eines Gehäuses 10 für eine Sammelleitung 20 bildet oder an/in einen Rahmen 10 für ein Kollektormodul 1 an- bzw. einsteckbar ist, wobei die Halterung 500 bevorzugt als ein Eckverbinder 500 ausgebildet ist.

Bevorzugt sitzt die Dichteinrichtung 510 wenigstens auf einem an der Sammelleitung 20 außen als umlaufender Vorsprung 252 ausgebildeten Dichtungssitz 252 außen dichtend an. Ferner kann Dichteinrichtung 510 zusätzlich oder alternativ abseits des umlaufenden Vorsprungs 252 und benachbart zum umlaufenden Vorsprung 252 außen an der Sammelleitung 20 dichtend ansitzen. Dies kann z. B. ein Bereich der Sammelleitung 20 sein, welcher einen Durchmesser des Mittenabschnitts 22 der Sammelleitung 20 aufweist, wobei dieser Bereich in Längsrichtung vor oder hinter dem eben genannten umlaufenden Vorsprung 252 vorgesehen sein kann. Eine andere Position der Dichteinrichtung 510 gegenüber der Sammelleitung 20 ist natürlich zusätzlich oder alternativ anwendbar.

Der Flansch 230 bzw. die Flansche 230 einer Sammelleitung 20 ist bzw. sind bevorzugt mittels einem nach außen aufgebogenen Material einer Wandung der Sammelleitung 20 ausgebildet. Die jeweilige Dichtsitzeinrichtung 250 der Sammelleitung 20 kann ein, zwei, drei oder mehr Dichtungssitze 252 aufweisen. Ferner kann die Dichtung 50 eines Dichtungssitzes 252 als eine O-Ringdichtung 50 ausgebildet sein. Des Weiteren können die zwei Eckverbinder 500 in einem gegenseitigen Verbindungsbereich wenigstens abschnittsweise komplementär ausgebildet sein. D. h. sie sind ineinander ggf. einfach verzahnt.

Die erfindungsgemäße hydraulische Kollektorsteckverbindungsanordnung 3 weist wenigstens zwei hydraulische Kollektorsteckverbindungen 30, insbesondere zwei erfindungsgemäße Kollektorsteckverbindungen 30 auf, wobei die Kollektorsteckverbindungsanordnung 3 eine einzige Montageklammer 400 umfasst, mittels welcher die wenigstens zwei Kollektorsteckverbindungen 30 mechanisch zusammenspannt sind. Mittels der einzigen Montageklammer 400 können die Montageeinrichtungen 230 der Sammelleitungen 20 einer Seite, die Montageeinrichtungen 330 der Hydrauliksteckverbinder 300 sowie die Montageeinrichtungen 230 der zweiten Sammelleitungen 20 einer anderen Seite mechanisch zusammengehalten bzw. -gespannt sein.

Die Kollektorsteckverbindungsanordnung 3 kann zwei Eckverbinder 500 umfassen, wobei die zwei Eckverbinder 500 in einem gegenseitigen Verbindungsbereich wenigstens abschnittsweise komplementär ausgebildet sein können (Verzahnung). Ferner kann ein Raum zwischen den zwei Eckverbindern 500 für die Kollektorsteckverbindung 30 von einem Deckel oder einer Blende verschließbar sein, wobei der Deckel bzw. die Blende an einem Eckverbinder 500, den Eckverbindern 500 oder am Gehäuse 10 bzw. Rahmen 10 für ein Kollektormodul 1 mechanisch angebunden sein kann.

Die Montagevorrichtung 400, insbesondere die Montageklammer 400, kann derart ausgebildet sein, dass der Deckel bzw. die Blende nur dann vollständig schließbar ist, wenn die Montagevorrichtung 400, insbesondere die Montageklammer 400, korrekt über den Sammelleitungen 20 und den Hydrauliksteckverbindern 300 montiert ist. D. h. die Montagevorrichtung 400, insbesondere die Montageklammer 400, ist derart ausgebildet, dass der Deckel bzw. die Blende über der Kollektorsteckverbindung 30 bzw. den Kollektorsteckverbindungen 30 nicht vollständig schließbar ist, wenn die Montagevorrichtung 400 nicht korrekt montiert ist, z. B. nicht vollständig übergeschoben oder noch teilweise offen ist.

Hierbei kann das erfindungsgemäße Vakuumröhrenkollektormodul 1, der erfindungsgemäße Vakuumröhrenkollektor 0, die erfindungsgemäße Vakuumröhrenkollektoranlage oder das erfindungsgemäße Thermosystem eine erfindungsgemäße Sammelleitung 20, eine erfindungsgemäße hydraulische Kollektorsteckverbindung 30 und/oder eine erfindungsgemäße hydraulische Kollektorsteckverbindungsanordnung 3 aufweisen. Eine erfindungsgemäße Sammelleitung 20 kann mittel- oder unmittelbar mit den Vor- und Rücklaufleitungen zu einem Speicher fluidmechanisch verbunden werden.

### Bezugszeichenliste

- 0: (thermischer) (Solar-/Vakuumröhren-)Kollektor mit einem oder einer Mehrzahl von (Solar-/Vakuumröhren-)Kollektormodulen 1, (Solar-)Kollektor
- 1: (thermisches) (Solar-/Vakuumröhren-)Kollektormodul, Solarmodul
- 3: hydraulische Kollektorsteckverbindungsanordnung, Solar-/Vakuumröhren-Kollektorsteckverbindungsanordnung

- 10: Gehäuse für Sammelleitung 20, Rahmen für (Solar-/Vakuumröhren-)Kollektormodul 1
- 12: Halter, Halterblech, bevorzugt aus Aluminium
- 14: Träger, Trägerblech, bevorzugt aus Aluminium, u. a. für Halterung 500, Deckel/Blende (bevorzugt aus Aluminium), etc.
- 20: (Solarkollektor-/Vakuumröhrenkollektor-) Sammelleitung, im Wesentlichen röhrenförmig
- 22: Mittenabschnitt der Sammelleitung 20, Leitrohrabschnitt, Wärmerohrabschnitt, im Wesentlichen röhrenförmig
- 24: Längsendabschnitt der Sammelleitung 20, im Wesentlichen röhrenförmig
- 25: hydraulischer und/oder mechanischer Anschlussabschnitt der Sammelleitung 20 bzw. des Längsendabschnitts 24, im Wesentlichen röhrenförmig
- 30: Hydraulische (Solar-/Vakuumröhren-)Kollektorsteckverbindung
- 50: Dichtung, insbesondere O-Ringdichtung, Formdichtung

- 220: Leitrohranschluss der Sammelleitung 20
- 230: Montageeinrichtung, Rasteinrichtung (Haken, Schulter, Ausnehmung etc.), Vorsprung, Ausnehmung, Flansch, Außenbund der Sammelleitung 20
- 240: Thermokompensationseinrichtung der Sammelleitung 20
- 242: Thermokompensationsvorrichtung, Innenspalte, Innennut (bevorzugt Tiefe > Breite); umlaufender Vorsprung, Bund (von außen betrachtet) der Thermokompensationseinrichtung 240
- 250: Dichtsitzeinrichtung der Sammelleitung 20
- 252: Dichtungssitz, Innennut (bevorzugt Tiefe ≈ Breite); umlaufender Vorsprung, Bund (von außen betrachtet) der Dichtsitzeinrichtung 250
- 300: (Hydraulik-)Steckverbinder, im Wesentlichen röhrenförmig
- 305: hydraulischer und mechanischer Anschlussabschnitt des Hydrauliksteckverbinders 300, im Wesentlichen röhrenförmig
- 306: Fase Zentrierbund
- 330: Montageeinrichtung, Rasteinrichtung (Haken, Schulter, Ausnehmung etc.), Vorsprung, Ausnehmung, Flansch, Außenbund des Hydrauliksteckverbinders 300
- 400: Montagevorrichtung, Montageklammer
- 500: Halterung, Eckverbinder, bevorzugt aus Kunststoff oder Aluminium
- 510: Dichteinrichtung, Dichtung, ggf. Doppeldichtung

- L: Längsrichtung, Axialrichtung der Sammelleitung 20, der Kollektorsteckverbindung 30, axial
- R: Radialrichtung der Sammelleitung 20, der Kollektorsteckverbindung 30, radial
- U: Umfangsrichtung der Sammelleitung 20, der Kollektorsteckverbindung 30, der Kollektorsteckverbindungsanordnung 3, tangential

## Patentansprüche

1. Solarkollektor-Sammelleitung (20) für ein Solarkollektormodul (1), insbesondere Vakuumröhrenkollektor-Sammelleitung (20) für ein Vakuumröhrenkollektormodul (1) einer Vakuumröhrenkollektoranlage, mit
einem langgestreckten Mittenabschnitt (22) und wenigstens einem sich daran in Längsrichtung (L) der Sammelleitung (20) anschließenden Längsendabschnitt (24), welcher längsendseitig einen Anschlussabschnitt (25) aufweist, **dadurch gekennzeichnet, dass**
der Mittenabschnitt (22) integral mit dem Längsendabschnitt (24) und der Längsendabschnitt (24) integral mit dem Anschlussabschnitt (25) ausgebildet, insbesondere ausgeformt, ist.

2. Solarkollektor-Sammelleitung (20) gemäß vorhergehendem Anspruch, **dadurch gekennzeichnet, dass** der Anschlussabschnitt (25) eine darin vorgesehene, insbesondere eine darin ausgeformte, Dichtsitzeinrichtung (250) zur inneren Aufnahme einer Dichtung (50) aufweist, und/oder der Längsendabschnitt (24) oder der Mittenabschnitt (22) eine darin vorgesehene, insbesondere eine darin ausgeformte, Thermokompensationseinrichtung (240) aufweist.

3. Solarkollektor-Sammelleitung (20) für ein Solarkollektormodul (1), insbesondere Vakuumröhrenkollektor-Sammelleitung (20) für ein Vakuumröhrenkollektormodul (1) einer Vakuumröhrenkollektoranlage, mit
einem langgestreckten Mittenabschnitt (22) und wenigstens einem sich daran in Längsrichtung (L) der Sammelleitung (20) anschließenden Längsendabschnitt (24), welcher längsendseitig einen Anschlussabschnitt (25) aufweist, **dadurch gekennzeichnet, dass**
der Anschlussabschnitt (25) eine darin vorgesehene, insbesondere eine darin ausgeformte, Dichtsitzeinrichtung (250) zur inneren Aufnahme einer Dichtung (50) aufweist, und/oder der Längsendabschnitt (24) oder der Mittenabschnitt (22) eine darin vorgesehene, insbesondere eine darin ausgeformte, Thermokompensationseinrichtung (240) aufweist.

4. Solarkollektor-Sammelleitung (20) gemäß vorhergehendem Anspruch, **dadurch gekennzeichnet, dass** der Mittenabschnitt (22) integral mit dem Längsendabschnitt (24) und der Längsendabschnitt (24) integral mit dem Anschlussabschnitt (25) ausgebildet, insbesondere ausgeformt, ist.

5. Solarkollektor-Sammelleitung (20) gemäß einem der vorhergehenden Ansprüche, **dadurch gekennzeichnet, dass** die Dichtsitzeinrichtung (250) wenigstens einen Dichtungssitz (252) aufweist, wobei
der Dichtungssitz (252) als eine in der Sammelleitung (20) vollständig umlaufende Innennut (252) ausgebildet ist, und die Innennut (252) außen an der Sammelleitung (20) bevorzugt als ein umlaufender Vorsprung (252) ausgebildet ist, und/oder
insbesondere eine Tiefe der Innennut (252) in Radialrichtung (R) der Sammelleitung (10) hauptsächlich oder im Wesentlichen einer Breite der Innennut (252) in Längsrichtung (L) entspricht.

6. Solarkollektor-Sammelleitung (20) gemäß einem der vorhergehenden Ansprüche, **dadurch gekennzeichnet, dass** die Thermokompensationseinrichtung (240) einem Aufnehmen einer thermischen Ausdehnung der Sammelleitung (20) dient, wobei
die Thermokompensationseinrichtung (240) bevorzugt bogenfaltenartig oder bevorzugt faltenbalgartig aus einer Wandung der Sammelleitung (20) herausgeformt ist und um die Sammelleitung (20) vollständig herumläuft.

7. Solarkollektor-Sammelleitung (20) gemäß einem der vorhergehenden Ansprüche, **dadurch gekennzeichnet, dass** die Thermokompensationseinrichtung (240) wenigstens eine Thermokompensationsvorrichtung (242) aufweist, wobei
die Thermokompensationsvorrichtung (242) als eine in der Sammelleitung (20) vollständig umlaufende Innenspalte (242) ausgebildet ist, und die Innenspalte (242) außen an der Sammelleitung (20) bevorzugt als ein umlaufender Vorsprung (242) ausgebildet ist, und/oder
insbesondere eine Tiefe der Innenspalte (242) in Radialrichtung (R) größer ist, bevorzugt im Wesentlichen um mehr als ein doppeltes oder im Wesentlichen um mehr als ein dreifaches größer ist, als eine Breite der Innenspalte (242).

8. Solarkollektor-Sammelleitung (20) gemäß einem der vorhergehenden Ansprüche, **dadurch gekennzeichnet, dass** beide Längsendabschnitte (24) in ihren betreffenden Anschlussabschnitten (25) jeweils zwei Dichtungssitze (252) aufweisen, und
beide Längsendabschnitte (24) benachbart zu ihren Anschlussabschnitten (25) jeweils eine Thermokompensationseinrichtung (240) aufweisen, wobei bevorzugt eine Thermokompensationseinrichtung (240) mehr Thermokompensationsvorrichtungen (242) als die andere Thermokompensationseinrichtung (240) aufweist.

9. Solarkollektor-Sammelleitung (20) gemäß einem der vorhergehenden Ansprüche, **dadurch gekennzeichnet, dass**:
• die Sammelleitung (20) an beiden Längsendabschnitten (24) jeweils einen Anschlussabschnitt (25) aufweist;
• der Mittenabschnitt (22) als ein Leitrohrabschnitt (22) oder ein Wärmerohrabschnitt (22) ausgebildet ist;
• der Anschlussabschnitt (25) als ein mechanischer und hydraulischer Anschlussabschnitt (25) ausgebildet ist;
• der Mittenabschnitt (22) einen einzigen Leitrohranschluss (220) oder eine Vielzahl von Leitrohranschlüssen (220) aufweist;
• eine einzelne Dichtsitzeinrichtung (250) ein, zwei oder drei Dichtungssitze (252) aufweist;
• ein Dichtungssitz (252) für eine Aufnahme einer Dichtung (50) nach Art einer O-Ringdichtung (50) oder einer Formdichtung (50) ausgebildet ist;
• eine Thermokompensationsvorrichtung (242) in der Sammelleitung (20) tiefer eingerichtet ist als ein Dichtungssitz (252);
• die Thermokompensationseinrichtung (240) eine, zwei, drei, vier oder eine Vielzahl von Thermokompensationsvorrichtungen (242) besitzt; und/oder
• ein Längsendabschnitt (24) eine einzige oder zwei Thermokompensationsvorrichtungen (242) und der andere Längsendabschnitt (24) zwei oder drei Thermokompensationsvorrichtungen (242) aufweist.

10. Solarkollektormodul (1), Vakuumröhrenkollektormodul (1), Solarkollektor (0), Vakuumröhrenkollektor (0), Kollektoranlage oder Thermosystem zur Wärmeerzeugung, z. B. für eine Warmwasserbereitung und/oder eine Heizungsunterstützung, **dadurch gekennzeichnet, dass**
das Solarkollektormodul (1), das Vakuumröhrenkollektormodul (1), Solarkollektor (0), der Vakuumröhrenkollektor (0), die Kollektoranlage oder das Thermosystem eine Solarkollektor-Sammelleitung (20) gemäß einem der vorhergehenden Ansprüche aufweist.
